# EUROPÄISCHE PATENTANMELDUNG

(11) **EP 4 751 539 A1**
(43) Veröffentlichungstag der Anmeldung: **03.06.2026**
(21) Anmeldenummer: 25210743.8
(22) Anmeldetag: 23.10.2025
(51) Int. Cl.: A01B 13/00, A01B 35/08, A01B 39/14, A01B 39/18, A01B 39/22, A01B 63/24, A01B 63/26

(54) **VORRICHTUNG ZUR FELDBODENBEARBEITUNG ODER ZUR HAKENDEN FELDBODENBEARBEITUNG**

(30) Priorität: 28.11.2024 DE 102024135289
(71) Anmelder: Amazonen-Werke H. Dreyer SE & Co. KG, 49205 Hasbergen (DE)
(72) Erfinder: KÜHN, Franz-Josef, 49205 Hasbergen-Gaste (DE); MAHLER, Tom, 49205 Hasbergen-Gaste (DE)

(57) **Zusammenfassung**

Die Erfindung betrifft eine Vorrichtung (1) zur Feldbodenbearbeitung oder zur hakenden Feldbodenbearbeitung aufweisend:
- einen Rahmen (2) zum Tragen mindestens einer Werkzeugeinrichtung (3),
- mindestens eine Werkzeugeinrichtung (3) zum Befestigen eines Bodenbearbeitungswerkzeugs (3B),
- wobei die mindestens eine Werkzeugeinrichtung (3) verschieblich im Rahmen (2) geführt ist, sodass der Abstand zwischen dem Rahmen (2) und einem Bodenbearbeitungswerkzeug (3B) der mindestens einen Werkzeugeinrichtung (3) veränderbar ist,
- mindestens eine Sperreinrichtung (4) zum Blockieren und Freigeben der relativen Bewegung zwischen Rahmen (2) und Werkzeugeinrichtung (3),
- wobei die mindestens eine Sperreinrichtung (4) mindestens eine Einkerbung (5) für einen formschlüssigen Eingriff umfasst.

## Beschreibung

Die Erfindung betrifft eine Vorrichtung zur Feldbodenbearbeitung oder zur hakenden Feldbodenbearbeitung.

Aus der WO2022/096737 A1 ist eine Werkzeugverstellung einer Hackmaschine über einen zentralen Exzenter bekannt, welcher über Koppelelemente mehrere Klemmbacken gleichzeitig gegen verschiedene Werkzeugträger bzw. Träger einer Werkzeugeinrichtung drückt.

Die Werkzeugträger werden daraufhin kraftschlüssig gegen den Hackrahmen gedrückt. Für die Bedienung dieser Einheit ist ein Zusatzwerkzeug nötig.

Vor diesem Hintergrund ist es Aufgabe der vorliegenden Erfindung, eine Vorrichtung zur Feldbodenbearbeitung oder zur hakenden Feldbodenbearbeitung anzugeben, welche kostengünstig, einfach und materialsparend herstellbar ist sowie eine verbesserte Bedienung für einen Nutzer aufweist.

Diese Aufgabe wird durch die Merkmale des unabhängigen Patentanspruchs gelöst. Weitere vorteilhafte Weiterbildungen sind Gegenstand der Unteransprüche.

Die vorliegende Erfindung umfasst eine Vorrichtung zur Feldbodenbearbeitung oder zur hakenden Feldbodenbearbeitung.

Die Vorrichtung umfasst einen Rahmen zum Tragen mindestens einer Werkzeugeinrichtung.

Ferner weist die Vorrichtung mindestens eine Werkzeugeinrichtung zum Befestigen eines Bodenbearbeitungswerkzeugs auf. Die mindestens eine Werkzeugeinrichtung ist verschieblich im Rahmen geführt, sodass der Abstand zwischen dem Rahmen und einem Bodenbearbeitungswerkzeug der mindestens einen Werkzeugeinrichtung veränderbar ist. Insbesondere ist somit die Arbeitsbreite der Werkzeugeinrichtung einstellbar. Vorzugsweise weist die Vorrichtung zumindest zwei Werkzeugeinrichtungen auf.

Außerdem weist die Vorrichtung mindestens eine Sperreinrichtung zum Blockieren und Freigeben der relativen Bewegung zwischen Rahmen und Werkzeugeinrichtung auf. Die mindestens eine Sperreinrichtung weist mindestens eine Einkerbung oder mindestens eine Kerbe für einen formschlüssigen Eingriff auf. Vorzugsweise weist die Sperreinrichtung zumindest zwei Einkerbungen oder Kerben für einen formschlüssigen Eingriff auf. Eine derartige Sperreinrichtung ist einfach und schnell herzustellen. Auch ist die mindestens eine Einkerbung kostengünstig, einfach und materialsparend herstellbar. Außerdem garantiert diese einen sicheren Halt gegen Verschiebung der mindestens einen Werkzeugeinrichtung relativ zum Rahmen. Auch kann die mindestens eine Werkzeugeinrichtung im Abstand zweier Einkerbungen oder zweier Kerben relativ zum Rahmen positioniert werden. Je enger zwei Einkerbungen oder Kerben zueinander gesetzt sind, desto feiner kann die mindestens eine Werkzeugeinrichtung relativ zum Rahmen positioniert werden. Vorzugsweise ist die Sperreinrichtung zum Blockieren und Freigeben der relativen Bewegung zwischen Rahmen und zwei Werkzeugeinrichtungen eingerichtet. Somit können mittels einer einzigen Sperreinrichtung zwei Werkzeugeinrichtungen gleichzeitig gegen Verschiebung gesichert werden.

Dabei sei erwähnt, dass eine Einkerbung oder eine Kerbe als eine schmale, nach innen oder unten spitz zulaufende Vertiefung oder als keilförmiger Einschnitt verstanden werden kann. Ferner kann ein Gewinde als eine profilierte Einkerbung verstanden werden.

Des Weiteren kann die mindestens eine Einkerbung als strukturierte Oberfläche und/oder als sich wiederholendes Muster von Vertiefungen in einer Oberfläche der mindestens einen Werkzeugeinrichtung und/oder als sich wiederholendes Muster von Vertiefungen in einer Oberfläche eines Trägers der mindestens einen Werkzeugeinrichtung ausgebildet sein.

Ferner kann die mindestens eine Einkerbung für den Eingriff eines Sperrriegels der mindestens einen Sperreinrichtung ausgebildet sein.

Auch kann die mindestens eine Einkerbung als Zahn einer Verzahnung ausgebildet sein. Dies ist einfach und leicht sowie mit Präzision herzustellen.

Zudem kann die mindestens eine Einkerbung an einem Träger der mindestens einen Werkzeugeinrichtung angeordnet sein.

Des Weiteren kann die mindestens eine Sperreinrichtung mindestens einen Sperrriegel für den Eingriff in die mindestens eine Einkerbung aufweisen. Der mindestens eine Sperrriegel kann am Rahmen oder an einem Rahmenteil des Rahmens, z. B. drehbar, angeordnet sein. Auch kann der mindestens eine Sperrriegel um seinen geometrischen Mittelpunkt drehbar am Rahmen oder drehbar an einem Rahmenteil des Rahmens angeordnet sein. Somit ist eine Drehung des mindestens einen Sperrriegels relativ zum Rahmen oder zu einem Rahmenteil des Rahmens auf einfache Weise realisierbar. Zudem ist es möglich, dass der mindestens eine Sperrriegel symmetrisch, z. B. punktsymmetrisch, ausgebildet ist. Vorzugsweise ist der Sperrriegel für den Eingriff in zwei Einkerbungen, insbesondere gleichzeitig, eingerichtet.

Außerdem kann vorgesehen sein, dass die mindestens eine Sperreinrichtung mindestens einen Sperrriegel für den Eingriff in die mindestens eine Einkerbung aufweist.

Der mindestens eine Sperrriegel kann einen Sperrkörper aufweisen, der oval- und/oder ellipsenförmig ausgebildet sein kann. Auch kann der Sperrkörper achsensymmetrisch ausgebildet sein. Vorzugsweise ist der Sperrriegel als Exzenter ausgebildet.

Zudem kann der Sperrkörper, z. B. außenseitig in radialer Richtung, geometrisch komplementär zu der mindestens einen Einkerbung ausgebildet sein. Auch kann der Sperrkörper eine Oberfläche in radialer Richtung aufweisen, die geometrisch komplementär zu der mindestens einen Einkerbung ausgebildet sein kann. Somit kann ein Eingriff des Sperrkörpers in die mindestens eine Einkerbung sichergestellt werden. Vorzugsweise ist der Sperrkörper außenseitig in radialer Richtung an zwei Stellen komplementär zu jeweils einer Einkerbung ausgebildet.

Dabei kann sich der Sperrkörper in radialer Richtung nach außen verjüngen, sodass dieser in die mindestens eine Einkerbung eingreifen kann. Außerdem kann der Sperrkörper eine Verzahnung oder mindestens einen Zahn zum Eingriff in die mindestens eine Einkerbung aufweisen. Auf diese Weise kann ein Eingriff des Sperrkörpers in die mindestens eine Einkerbung sichergestellt werden.

Des Weiteren ist es möglich, dass die mindestens eine Sperreinrichtung mindestens einen Anschlag aufweist, um eine Bewegung, wie z. B. eine Drehbewegung, in eine Richtung zu begrenzen. Ferner kann die mindestens eine Sperreinrichtung zwei Anschläge aufweisen, die diametral zueinander zu einem geometrischen Mittelpunkt des Sperrriegels angeordnet sind.

Der mindestens eine Anschlag kann ausgebildet sein, bei Drehung des Sperrriegels im Uhrzeigersinn gegen die mindestens eine Werkzeugeinrichtung oder gegen einen Träger der mindestens einen Werkzeugeinrichtung anzuschlagen. Dadurch ist die Drehung oder der Drehwinkel des Sperrriegels begrenzbar.

Zudem kann der mindestens eine Anschlag außenseitig an einem Sperrriegel der mindestens einen Sperreinrichtung angeordnet sein. Dies vereinfacht die Herstellung des Sperrriegels.

Außerdem kann vorgesehen sein, dass die mindestens eine Sperreinrichtung mindestens einen Sperrriegel für den Eingriff in die mindestens eine Einkerbung aufweist.

Der mindestens eine Sperrriegel kann einen Spannhebel aufweisen, um den mindestens einen Sperrriegel in einer Position zu arretieren und/oder in eine Position zu spannen. Somit kann die Position der mindestens einen Werkzeugeinrichtung relativ zum Rahmen gesichert werden. Somit kann die Bedienung ohne Zusatzwerkzeug erfolgen. Folglich ist also eine verbesserte Bedienung für einen Nutzer gewährleistbar.

Ferner kann der Spannhebel mit einem Ende, z. B. drehfest, an einem Sperrkörper und/oder an mindestens einem Anschlag der mindestens einen Sperreinrichtung befestigt sein. Dabei kann der Spannhebel freikragend ausgebildet sein.

Zudem kann der Spannhebel so geformt sein, dass dieser einen Griff zur Handbetätigung formt. Auch kann der Griff zur Handbetätigung an einem freikragenden Ende des Spannhebels angeordnet und/oder ausgebildet sein.

Außerdem kann der Spannhebel federnd ausgebildet sein, um einen Sperrkörper der mindestens einen Sperreinrichtung in eine Position oder in eine Richtung vorzuspannen. Somit kann die Position der mindestens einen Werkzeugeinrichtung relativ zum Rahmen gesichert werden.

Der Spannhebel kann einen Federstahl aufweisen oder aus diesem gebildet sein.

Des Weiteren kann die mindestens eine Sperreinrichtung und/oder der Rahmen ein Halteblech aufweisen, an welchem mindestens ein Sperrriegel der mindestens einen Sperreinrichtung oder mindestens ein Spannhebel eines Sperrriegels der mindestens einen Sperreinrichtung einhakbar ist. Somit kann die mindestens eine Sperreinrichtung bzw. deren mindestens eine Sperrriegel in einer Position arretiert werden.

Das Halteblech kann mindestens einen Haken zum Umgreifen eines Spannhebels eines Sperrriegels der mindestens einen Sperreinrichtung aufweisen. Somit ist die mindestens eine Sperreinrichtung bzw. deren mindestens eine Sperrriegel in einer Position arretierbar.

Auch kann das Halteblech zwischen zwei Rahmenteilen des Rahmens angeordnet sein. Auf diese Weise ist dessen Position relativ zum Rahmen befestigbar. Ferner kann das Halteblech eine Aussteifung des Rahmens unterstützen.

Des Weiteren kann die mindestens eine Werkzeugeinrichtung einen Träger und/oder ein Bodenbearbeitungswerkzeug aufweisen. Vorzugsweise weist die Werkzeugeinrichtung zwei Träger und/oder zwei Bodenbearbeitungswerkzeuge auf.

Das Bodenbearbeitungswerkzeug kann an dem Träger oder an einem Ende des Trägers befestigt sein.

Der Träger kann quaderförmig ausgebildet sein. Auch kann der Träger eine Kantenlänge aufweisen, die größer ist als die Summe der beiden anderen Kantenlängen.

Ferner kann der Träger die mindestens eine Einkerbung aufweisen.

Auch kann eine Seitenfläche des Trägers die mindestens eine Einkerbung aufweisen.

Zudem kann der Träger oder zumindest ein Teil des Trägers die mindestens eine Einkerbung bilden.

Außerdem kann die Seitenfläche des Trägers, die von der kürzesten und längsten Seitenlänge gebildet wird, die mindestens eine Einkerbung aufweisen.

Ferner kann die mindestens eine Einkerbung senkrecht in die Oberfläche des Trägers eingeformt sein.

Des Weiteren kann die mindestens eine Werkzeugeinrichtung ein Bodenbearbeitungswerkzeug aufweisen, das eine Vibrofeder und/oder ein Halteelement und/oder ein Hackwerkzeug, wie z. B. ein Messer, umfassen kann. Dabei kann die Vibrofeder am Träger befestigt sein. Das Halteelement kann das Hackwerkzeug beabstandet zur Vibrofeder führen. Das Hackwerkzeug sowie die Vibrofeder können an dem Halteelement befestigt sein.

Außerdem ist es möglich, dass der Rahmen mehrteilig ausgebildet ist.

Auch kann der Rahmen zweiteilig ausgebildet sein oder zwei Rahmenteile aufweisen.

Jeder Rahmenteil kann aus einem Blech geformt sein und die beiden Rahmenteile können durch Streben des Rahmens voneinander beabstandet und miteinander verbunden sein.

Zudem kann der Rahmen eine oder mehrere Streben umfassen, um zwei Rahmenteile voneinander zu beabstanden.

Außerdem kann der Rahmen mindestens eine Durchführung für einen Träger der mindestens einen Werkzeugeinrichtung aufweisen, um die mindestens eine Werkzeugeinrichtung verschieblich zu führen. Vorzugsweise weist der Rahmen zwei Durchführungen für jeweils einen Träger auf.

Jeder Rahmenteil kann mindestens eine Durchführung für einen Träger der mindestens einen Werkzeugeinrichtung aufweisen, um die mindestens eine Werkzeugeinrichtung verschieblich zu führen. Vorzugsweise weist jeder Rahmenteil zwei Durchführungen für jeweils einen Träger auf.

Ferner kann die mindestens eine Durchführung geometrisch an einen Träger der mindestens einen Werkzeugeinrichtung angepasst sein, um eine spielarme Führung zu gewährleisten.

Des Weiteren kann die mindestens eine Durchführung und ein Träger der mindestens einen Werkzeugeinrichtung sowie die mindestens eine Sperreinrichtung so aufeinander abgestimmt sein, dass in einem ersten Zustand, in welchem die mindestens eine Sperreinrichtung eine Relativbewegung des Trägers zum Rahmen sperrt, der mindestens eine Sperrriegel der mindestens einen Sperreinrichtung in mindestens eine Einkerbung eingreift und den Träger gegen den Rahmen drückt, um neben einem Formschluss zusätzlich einen Kraftschluss zu erzeugen. Vorzugsweise sind die zwei Durchführungen und die zwei Träger der Werkzeugeinrichtung sowie die Sperreinrichtung so aufeinander abgestimmt, dass in einem ersten Zustand, in welchem die mindestens eine Sperreinrichtung eine Relativbewegung der Träger zum Rahmen sperrt, der mindestens eine Sperrriegel der mindestens einen Sperreinrichtung in mindestens zwei Einkerbungen eingreift und die Träger gegen den Rahmen drückt, um neben einem Formschluss zusätzlich einen Kraftschluss zu erzeugen. Besonders vorzugsweise ist der Sperrriegel zwischen den beiden Trägern angeordnet.

Auch ist es möglich, dass die mindestens eine Durchführung und ein Träger der mindestens einen Werkzeugeinrichtung sowie die mindestens eine Sperreinrichtung so aufeinander abgestimmt sind, dass in einem zweiten Zustand, in welchem die mindestens eine Sperreinrichtung eine Relativbewegung des Trägers zum Rahmen freigibt, der Eingriff des mindestens einen Sperrriegels der mindestens einen Sperreinrichtung in den Träger gelöst ist, sodass weder ein Formschluss noch ein Kraftschluss erzeugbar ist. Vorzugsweise sind die beiden Durchführungen und die zwei Träger der mindestens einen Werkzeugeinrichtung sowie die mindestens eine Sperreinrichtung so aufeinander abgestimmt, dass in einem zweiten Zustand, in welchem die mindestens eine Sperreinrichtung eine Relativbewegung der beiden Träger zum Rahmen freigibt, der Eingriff des mindestens einen Sperrriegels der mindestens einen Sperreinrichtung in die Träger gelöst ist, sodass weder ein Formschluss noch ein Kraftschluss erzeugbar ist.

Bei Vergleich des ersten Zustands mit dem zweiten Zustand kann festgestellt werden, dass eine Verdrehung der mindestens einen Sperreinrichtung oder des mindestens einen Sperrriegels der mindestens einen Sperreinrichtung zum Eingriff in die mindestens eine Einkerbung oder zum Lösen aus dem Eingriff führen kann. Vorzugsweise führt eine Verdrehung der mindestens einen Sperreinrichtung oder des mindestens einen Sperrriegels der mindestens einen Sperreinrichtung zum Eingriff in zwei Einkerbungen oder zum Lösen aus dem Eingriff in zwei Einkerbungen gleichzeitig.Außerdem kann die Vorrichtung einen Anschluss an eine Zugmaschine oder an ein Gestell einer Zugmaschine aufweisen.

Im Ergebnis wird einer stabile Verbindung zwischen Werkzeugeinrichtung und Rahmen hergestellt, bei der ein Verschieben der Werkzeugeinrichtung relativ zum Rahmen einfach und schnell ohne zusätzliches Werkzeug möglich ist.

Nachfolgend wird der oben dargestellte Erfindungsgedanke nochmals und ergänzend mit anderen Worten ausgedrückt.

Dieser Gedanke betrifft - vereinfacht dargestellt - einen Rahmen bzw. Hackrahmen einer Hackmaschine bzw. einer Vorrichtung zur Feldbodenbearbeitung.

Sperrriegel einer Sperreinrichtung können mit einem federnden Element bzw. mit einem Spannhebel um einen Drehpunkt / geometrischen Mittelpunkt eines Sperrriegels bewegt werden. Diese können ohne Werkzeug bedient werden.

Beim Verdrehen kann der effektive Durchmesser größer werden und einen Träger einer Werkzeugeinrichtung an den umschließenden Hackrahmen bzw. Rahmen drücken. Durch die Keilform der Sperrriegel am jeweiligen äußeren Umfang und der passenden Einkerbung im Träger kann dieser form- und/oder kraftschlüssig mit dem Hackrahmen verbunden werden.

Um Toleranzen auszugleichen, kann der Spannhebel weiter um den Drehpunkt eines Sperrriegels bewegt und in eine haken-förmige Kontur eines Halteblechs des Rahmens eingehängt werden.

Kurz zusammengefasst kann mit der vorliegenden Erfindung eine form- und/oder kraftschlüssige Verbindung zwischen Hackrahmen/Rahmen und Träger einer Werkzeugeinrichtung hergestellt werden. Dabei kann die Bedienung komplett ohne Zusatzwerkzeug erfolgen.

Nachstehend wird die Erfindung anhand von Ausführungsbeispielen in Verbindung mit zugehörigen Zeichnungen näher erläutert. Hierbei zeigen schematisch:
- **Fig. 1**: eine räumliche Ansicht auf eine Vorrichtung zur Feldbodenbearbeitung;
- **Fig. 2**: eine vergrößerte Ansicht des hervorgehobenen Abschnitts aus Figur 1 in einem ersten Zustand;
- **Fig. 3**: eine vergrößerte Ansicht des hervorgehobenen Abschnitts aus Figur 1 in einem zweiten Zustand;
- **Fig. 4**: eine vereinfachte Darstellung von Figur 2 in einer veränderten Perspektive; und
- **Fig. 5**: eine vereinfachte Darstellung von Figur 3 in einer weiteren Perspektive.

In der nachfolgenden Beschreibung werden gleiche Bezugszeichen für gleiche Gegenstände verwendet.

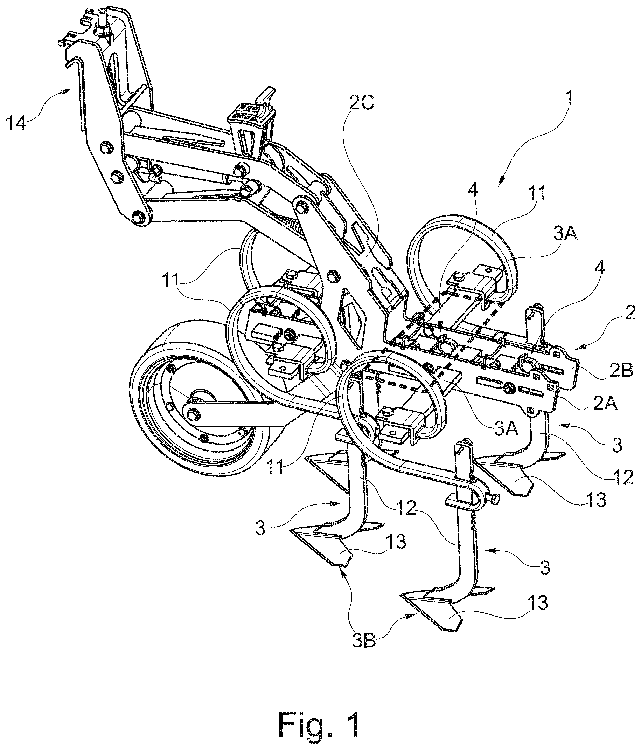

Figur 1 zeigt eine räumliche Ansicht auf eine Vorrichtung 1 zur Feldbodenbearbeitung. Genauer dargestellt zeigt Figur 1 eine Vorrichtung 1 zur Feldbodenbearbeitung oder zur hakenden Feldbodenbearbeitung mit einem Rahmen 2 zum Tragen mehrerer Werkzeugeinrichtungen 3.

Dabei hat die Vorrichtung 1 - wie angedeutet - mehrere Werkzeugeinrichtungen 3 jeweils zum Befestigen eines Bodenbearbeitungswerkzeugs 3B.

Jede Werkzeugeinrichtung 3 ist verschieblich im Rahmen 2 geführt, sodass der Abstand zwischen dem Rahmen 2 und einem Bodenbearbeitungswerkzeug 3B der zugehörigen Werkzeugeinrichtung 3 veränderbar ist.

Des Weiteren zeigt Figur 1, dass die Vorrichtung 1 mehrere Sperreinrichtungen 4 zum Blockieren und Freigeben der relativen Bewegung zwischen dem Rahmen 2 und einer Werkzeugeinrichtung 3 umfasst.

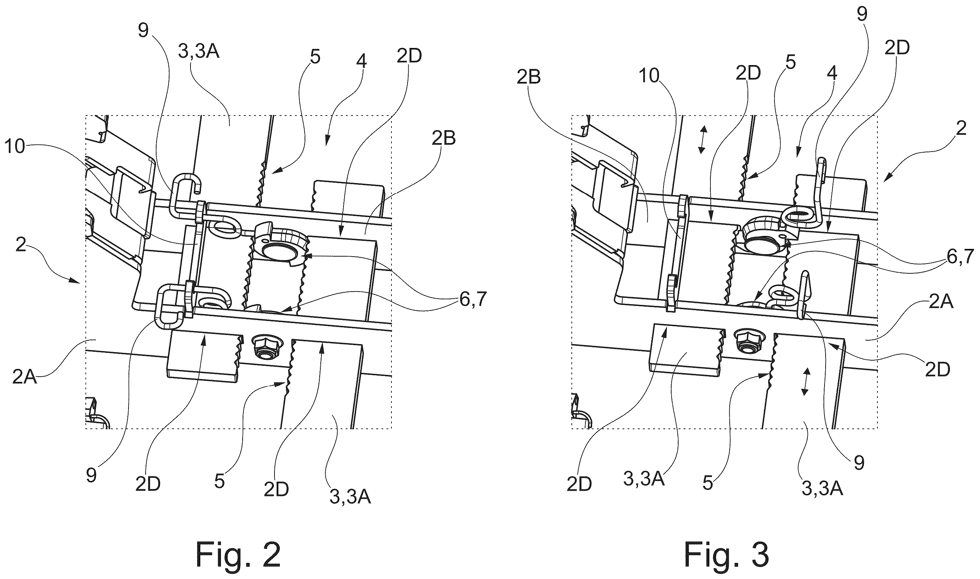

Vor diesem Hintergrund zeigt Figur 2 eine vergrößerte Ansicht des hervorgehobenen bzw. umrandeten Abschnitts aus Figur 1 in einem ersten Zustand und Figur 3 eine vergrößerte Ansicht des hervorgehobenen Abschnitts aus Figur 1 in einem zweiten Zustand.

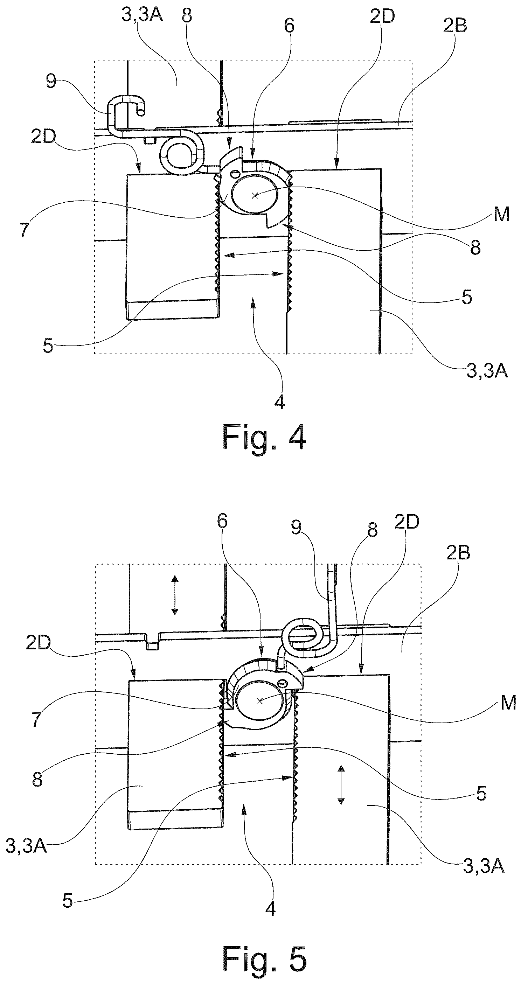

Gleiches gilt für die Figuren 4 und 5, jedoch zeigen diese eine vereinfachte Darstellung von Figur 2 bzw. 3 in einer weiteren Perspektive.

Der Einfachheit und Kürze halber werden nachstehend die Figuren 1 bis 5 gemeinsam beschrieben.

Aus den Figuren 2 bis 5 geht hervor, dass jede Sperreinrichtung 4 mehrere Einkerbungen 5 für einen formschlüssigen Eingriff umfasst.

Hierbei sind die Einkerbungen 5 als sich wiederholendes Muster von Vertiefungen in einer Oberfläche jeder Werkzeugeinrichtung 3 bzw. in einer Oberfläche eines Trägers 3A einer Werkzeugeinrichtung 3 ausgebildet.

Die Einkerbungen 5 sind für den Eingriff von Sperrriegeln 6 der Sperreinrichtung 4 ausgebildet, wobei die Einkerbungen 5 konkret als Zähne einer Verzahnung ausgebildet sind.

Ferner hat jede Sperreinrichtung 4 - wie schon erwähnt - zwei Sperrriegel 6 für den Eingriff in die Einkerbungen 5.

Dabei ist jeder Sperrriegel 6 am Rahmen 2 oder an einem Rahmenteil 2A, 2B des Rahmens 2 drehbar angeordnet. Genau genommen ist jeder Sperrriegel 6 um seinen geometrischen Mittelpunkt M drehbar am Rahmen 2 bzw. drehbar an einem Rahmenteil 2A, 2B des Rahmens 2 angeordnet (vgl. Figuren 4 und 5). Jeder Sperrriegel 6 ist punktsymmetrisch ausgebildet. Jeder Sperrriegel 6 greift gleichzeitig in zwei Einkerbungen 5 der gegenüberliegend angeordneten Werkzeugeinrichtungen 3 bzw. Träger 3A ein, wobei in einer nicht dargestellten Ausführungsform denkbar ist nur einen einzigen Sperrriegel 6 hierfür zu verwenden.

Wie den Figuren 2 bis 5 zu entnehmen, weist die Sperreinrichtung 4 zwei Sperrriegel 6 für den Eingriff in die Einkerbungen 5 auf, wobei in einer alternativen Ausführungsform nur ein einzelner Sperrriegel 6 angeordnet ist.

Dabei hat jeder Sperrriegel 6 einen Sperrkörper 7, der oval- oder ellipsenförmig sowie achsensymmetrisch ausgebildet ist. Der Sperrriegel 6 bzw. Sperrkörper 7 dient somit als Exzenter.

Ferner ist der Sperrkörper 7 außenseitig in radialer Richtung geometrisch komplementär zu den Einkerbungen 5 ausgebildet. Genau genommen verjüngt sich der Sperrkörper 7 in radialer Richtung nach außen, sodass dieser in die Einkerbungen 5 eingreifen kann. Dabei umfasst der Sperrkörper 7 eine Verzahnung bzw. einen Zahn zum Eingriff in eine bzw. in die Einkerbungen 5.

Des Weiteren zeigen Figuren 2 bis 5, dass die Sperreinrichtung 4 zwei Anschläge 8 aufweist, um eine Drehbewegung in eine Richtung zu begrenzen. Die zwei Anschläge 8 sind diametral zueinander zu einem geometrischen Mittelpunkt M des Sperrriegels 6 sowie außenseitig an einem Sperrriegel 6 der Sperreinrichtung 4 angeordnet.

Konkret sind die beiden Anschläge 8 ausgebildet, bei Drehung des Sperrriegels 6 im Uhrzeigersinn gegen die linke und rechte Werkzeugeinrichtung 3 bzw. gegen einen Träger 3A der Werkzeugeinrichtung 3 anzuschlagen, wodurch die Drehung oder der Drehwinkel des Sperrriegels 6 begrenzt ist.

Des Weiteren zeigen die Figuren 1 bis 5, dass jeder Sperrriegel 6 einen Spannhebel 9 aufweist, um den zugehörigen Sperrriegel 6 in einer Position zu arretieren bzw. in eine Position zu spannen.

Dabei ist der Spannhebel 9 mit einem Ende drehfest am zugehörigen Sperrkörper 7 und an einem Anschlag 8 der Sperreinrichtung 4 befestigt. Der Spannhebel 9 ist freikragend ausgebildet und so geformt, dass dieser einen Griff zur Handbetätigung formt. Anders ausgedrückt, ist der Griff zur Handbetätigung an einem freikragenden Ende des Spannhebels 9 angeordnet und ausgebildet.

Hierbei ist der Spannhebel 9 federnd ausgebildet, um jeden Sperrkörper 7 der Sperreinrichtung 4 in eine Position oder in eine Richtung vorzuspannen, wobei der Spannhebel 9 aus einem Federstahl gebildet ist.

Gemäß den Figuren 2 und 3 hat jede Sperreinrichtung 4 oder der Rahmen 2 ein Halteblech 10, an welchem zwei Sperrriegel 6 einer Sperreinrichtung 4 oder zwei Spannhebel 9 zweier Sperrriegel 6 einhakbar sind.

Das Halteblech 10 umfasst zwei Haken jeweils zum Umgreifen eines Spannhebels 9 eines Sperrriegels 6.

Ferner ist das Halteblech 10 zwischen zwei Rahmenteilen 2A, 2B des Rahmens 2 angeordnet.

Des Weiteren ist den Figuren 1 bis 5 zu entnehmen, dass jede Werkzeugeinrichtung 3 einen Träger 3A und ein Bodenbearbeitungswerkzeug 3B aufweist.

Dabei ist das Bodenbearbeitungswerkzeug 3B an dem Träger 3A oder an einem Ende des Trägers 3A befestigt (vgl. Figur 1), wobei der Träger 3A quaderförmig ausgebildet ist. Besser beschrieben, weist der Träger 3A eine Kantenlänge auf, die größer ist als die Summe der beiden anderen Kantenlängen.

Wie in den Figuren 2 bis 5 dargestellt, hat jeder Träger 3A bzw. eine Seitenfläche des Trägers 3A die Einkerbungen 5. Mit anderen Worten geschildert, bildet jeder Träger 3A oder zumindest ein Teil des Trägers 3A die Einkerbungen 5. Genau genommen weist die Seitenfläche des Trägers 3A, die von der kürzesten und längsten Seitenlänge gebildet wird, die Einkerbungen 5 auf. Dabei sind die Einkerbungen 5 senkrecht in die Oberfläche jedes Trägers 3A eingeformt.

Gemäß Figur 1 umfasst jede Werkzeugeinrichtung 3 ein Bodenbearbeitungswerkzeug 3B, das wiederum eine Vibrofeder 11, ein Halteelement 12 und ein Hackwerkzeug 13, wie z. B. ein Messer, hat.

Während die Vibrofeder 11 am Träger 3A befestigt ist, führt das Halteelement 12 das Hackwerkzeug 13 und zwar beabstandet zur Vibrofeder 11. Das Hackwerkzeug 13 sowie die Vibrofeder 11 sind an dem Halteelement 12 befestigt.

Wie in den Figuren 1 bis 3 gezeigt, ist der Rahmen 2 zweiteilig ausgebildet bzw. weist dieser zwei Rahmenteile 2A, 2B auf.

Jeder Rahmenteil 2A, 2B ist aus einem Blech geformt und die beiden Rahmenteile 2A, 2B sind durch Streben 2C des Rahmens 2 voneinander beabstandet und miteinander verbunden. Auch hat der Rahmen 2 mehrere Streben 2C, um die zwei Rahmenteile 2A, 2B voneinander zu beabstanden (vgl. Figur 1).

Gemäß den Figuren 2 bis 5 hat der Rahmen 2 zwei Durchführungen 2D für einen Träger 3A der Werkzeugeinrichtung 3, um die zugehörigen Werkzeugeinrichtungen 3 verschieblich zu führen.

Genau genommen hat jeder Rahmenteil 2A, 2B eine Durchführung 2D für einen Träger 3A der Werkzeugeinrichtung 3, um die Werkzeugeinrichtung 3 verschieblich zu führen.

Jede Durchführung 2D ist geometrisch an den Träger 3A der Werkzeugeinrichtung 3 angepasst, um eine spielarme Führung zu gewährleisten.

Bezugnehmend auf Figuren 2 und 4 sind die Durchführungen 2D und ein Träger 3A jeder Werkzeugeinrichtung 3 sowie die Sperreinrichtung 4 so aufeinander abgestimmt, dass in einem ersten Zustand, in welchem die Sperreinrichtung 4 eine Relativbewegung des Trägers 3A zum Rahmen 2 sperrt, die Sperrriegel 6 der Sperreinrichtung 4 in jeweils eine Einkerbung 5 eingreifen und den Träger 3A gegen den Rahmen 2 drücken, um neben einem Formschluss zusätzlich einen Kraftschluss zu erzeugen.

Gemäß den Figuren 3 und 5 sind die Durchführungen 2D und ein Träger 3A jeder Werkzeugeinrichtung 3 sowie die Sperreinrichtung 4 so aufeinander abgestimmt, dass in einem zweiten Zustand, in welchem die Sperreinrichtung 4 eine Relativbewegung des Trägers 3A zum Rahmen 2 freigibt, der Eingriff der Sperrriegel 6 der Sperreinrichtung 4 in den Träger 3A gelöst sind, sodass weder ein Formschluss noch ein Kraftschluss erzeugbar ist.

Wie bei Vergleich der Figur 2 mit 3 oder 4 mit 5 führt eine Verdrehung der Sperreinrichtung 4 bzw. der Sperrriegel 6 zum Eingriff in eine Einkerbung 5 oder zum Lösen aus dem Eingriff.

Abschließend sei noch erwähnt, dass gemäß Figur 1 die Vorrichtung 1 einen Anschluss 14 an eine Zugmaschine oder an ein Gestell an einer Zugmaschine aufweist.

### Bezugszeichenliste

- 1: Vorrichtung zur Feldbodenbearbeitung
- 2: Rahmen
- 2A: Rahmenteil
- 2B: Rahmenteil
- 2C: Strebe
- 2D: Durchführung
- 3: Werkzeugeinrichtung
- 3A: Träger
- 3B: Bodenbearbeitungswerkzeug
- 4: Sperreinrichtung
- 5: Einkerbungen
- 6: Sperrriegel
- 7: Sperrkörper
- 8: Anschlag
- 9: Spannhebel
- 10: Halteblech
- 11: Vibrofeder
- 12: Halteelement
- 13: Hackwerkzeug
- 14: Anschluss

- M: Mittelpunkt

## Patentansprüche

1. Vorrichtung (1) zur Feldbodenbearbeitung oder zur hakenden Feldbodenbearbeitung aufweisend:
- einen Rahmen (2) zum Tragen mindestens einer Werkzeugeinrichtung (3),
- mindestens eine Werkzeugeinrichtung (3) zum Befestigen eines Bodenbearbeitungswerkzeugs (3B),
- wobei die mindestens eine Werkzeugeinrichtung (3) verschieblich im Rahmen (2) geführt ist, sodass der Abstand zwischen dem Rahmen (2) und einem Bodenbearbeitungswerkzeug (3B) der mindestens einen Werkzeugeinrichtung (3) veränderbar ist,
- mindestens eine Sperreinrichtung (4) zum Blockieren und Freigeben der relativen Bewegung zwischen Rahmen (2) und Werkzeugeinrichtung (3),
**dadurch gekennzeichnet, dass**
die mindestens eine Sperreinrichtung (4) mindestens eine Einkerbung (5) für einen formschlüssigen Eingriff umfasst.

2. Vorrichtung nach Anspruch 1,
- wobei die mindestens eine Einkerbung (5) als strukturierte Oberfläche und/oder als sich wiederholendes Muster von Vertiefungen in einer Oberfläche der mindestens einen Werkzeugeinrichtung (3) und/oder als sich wiederholendes Muster von Vertiefungen in einer Oberfläche eines Trägers (3A) der mindestens einen Werkzeugeinrichtung (3) ausgebildet ist,
und/oder
- wobei die mindestens eine Einkerbung (5) für den Eingriff eines Sperrriegels (6) der mindestens einen Sperreinrichtung (4) ausgebildet ist.

3. Vorrichtung nach Anspruch 1 oder 2,
- wobei die mindestens eine Sperreinrichtung (4) mindestens einen Sperrriegel (6) für den Eingriff in die mindestens eine Einkerbung (5) aufweist,
- wobei der mindestens eine Sperrriegel (6) am Rahmen (2) oder an einem Rahmenteil (2A, 2B) des Rahmens (2), insbesondere drehbar, angeordnet ist.

4. Vorrichtung nach einem der vorangehenden Ansprüche,
- wobei die mindestens eine Sperreinrichtung (4) mindestens einen Sperrriegel (6) für den Eingriff in die mindestens eine Einkerbung (5) aufweist,
- wobei der mindestens eine Sperrriegel (6) einen Sperrkörper (7) aufweist, der oval- und/oder ellipsenförmig ausgebildet ist, und
- wobei der Sperrkörper (7) eine Oberfläche in radialer Richtung aufweist, die geometrisch komplementär zu der mindestens einen Einkerbung (5) ausgebildet ist.

5. Vorrichtung nach einem der vorangehenden Ansprüche,
- wobei die mindestens eine Sperreinrichtung (4) mindestens einen Anschlag (8) aufweist, um eine Bewegung, insbesondere eine Drehbewegung, in eine Richtung zu begrenzen,
- wobei der mindestens eine Anschlag (8) außenseitig an einem Sperrriegel (6) der mindestens einen Sperreinrichtung (4) angeordnet ist.

6. Vorrichtung nach einem der vorangehenden Ansprüche,
- wobei die mindestens eine Sperreinrichtung (4) mindestens einen Sperrriegel (6) für den Eingriff in die mindestens eine Einkerbung (5) aufweist,
- wobei der mindestens eine Sperrriegel (6) einen Spannhebel (9) aufweist, um den mindestens einen Sperrriegel (6) in einer Position zu arretieren und/oder in eine Position zu spannen, und
- wobei der Spannhebel (9) so geformt ist, dass dieser einen Griff zur Handbetätigung formt,

7. Vorrichtung nach einem der vorangehenden Ansprüche,
- wobei die mindestens eine Sperreinrichtung (4) und/oder der Rahmen (2) ein Halteblech (10) aufweist, an welchem mindestens ein Sperrriegel (6) der mindestens einen Sperreinrichtung (4) oder mindestens ein Spannhebel (9) eines Sperrriegels (6) der mindestens einen Sperreinrichtung (4) einhakbar ist,
- wobei das Halteblech (10) mindestens einen Haken zum Umgreifen eines Spannhebels (9) eines Sperrriegels (6) der mindestens einen Sperreinrichtung (4) umfasst.

8. Vorrichtung nach einem der vorangehenden Ansprüche,
- wobei die mindestens eine Werkzeugeinrichtung (3) einen Träger (3A) und/oder ein Bodenbearbeitungswerkzeug (3B) aufweist,
- wobei das Bodenbearbeitungswerkzeug (3B) an dem Träger (3A) oder an einem Ende des Trägers (3A) befestigt ist, und
- wobei der Träger (3A) die mindestens eine Einkerbung (5) aufweist.

9. Vorrichtung nach einem der vorangehenden Ansprüche,
- wobei der Rahmen (2) zweiteilig ausgebildet ist oder zwei Rahmenteile (2A, 2B) aufweist,
- wobei jeder Rahmenteil (2A, 2B) mindestens eine Durchführung (2D) für einen Träger (3A) der mindestens einen Werkzeugeinrichtung (3) aufweist, um die mindestens eine Werkzeugeinrichtung (3) verschieblich zu führen,
- wobei die mindestens eine Durchführung (2D) und ein Träger (3A) der mindestens einen Werkzeugeinrichtung (3) sowie die mindestens eine Sperreinrichtung (4) so aufeinander abgestimmt und sind, dass in einem ersten Zustand, in welchem die mindestens eine Sperreinrichtung (4) eine Relativbewegung des Trägers (3A) zum Rahmen (2) sperrt, der mindestens eine Sperrriegel (6) der mindestens einen Sperreinrichtung (4) in mindestens eine Einkerbung (5) eingreift und den Träger (3A) gegen den Rahmen (2) drückt, um neben einem Formschluss zusätzlich einen Kraftschluss zu erzeugen,
- wobei die mindestens eine Durchführung (2D) und ein Träger (3A) der mindestens einen Werkzeugeinrichtung (3) sowie die mindestens eine Sperreinrichtung (4) so aufeinander abgestimmt und sind, dass in einem zweiten Zustand, in welchem die mindestens eine Sperreinrichtung (4) eine Relativbewegung des Trägers (3A) zum Rahmen (2) freigibt, der Eingriff des mindestens einen Sperrriegels (6) der mindestens einen Sperreinrichtung (4) in den Träger (3A) gelöst ist, sodass weder ein Formschluss noch ein Kraftschluss erzeugbar ist.

10. Vorrichtung nach einem der vorangehenden Ansprüche,
- wobei die Vorrichtung (1) einen Anschluss (14) an eine Zugmaschine oder an ein Gestell einer Zugmaschine aufweist.
